# EUROPEAN PATENT APPLICATION

(11) **EP 1 526 307 A2**
(43) Date of publication of application: **27.04.2005**
(21) Application number: 04024622.5
(22) Date of filing: 15.10.2004
(51) Int. Cl.: F16H 25/20, A47C 1/024

(54) **Linear type actuator**

(30) Priority: 20.10.2003 JP 2003359311
(71) Applicant: Omron Healthcare Co., Ltd., Kyoto 615-0084 (JP)
(72) Inventor: Akitoshi, Miki, Ukyo-ku Kyoto-shi Kyoto 615-0084 (JP)
(74) Representative: Kilian, Helmut, Dr.

(57) **Abstract**

An actuator (1) has a gear case upper part (2), a gear case lower part (3), a resin inner pipe (5) supported movably and a DC motor (6). The gear case upper part (2) and the gear case lower part (3) are configured to be divided into two parts along the central axis of the inner pipe (5). A gear case (4) configured by the gear case upper part (2) and the gear case lower part (3) is integratedwithapedestal (43) for attaching the DC motor (6) thereto, a gear storage part (42) for storing a worm gear (61) and a worm wheel (14), and limit sensor storage parts (81, 91) for storing limit sensors (8, 9) that detect limit location of the inner pipe (5).

## Description

### Technical Field

The present invention relates to an actuator, in particular, construction of an actuator applicable to reclining chair and the like.

### Related Background Art

As mentioned below, the conventional actuator for reclining chair has two types of construction.
(A) In the first type of construction, the actuator consists of an outer tube and an inner tube. In this construction, expanding/contracting operation is performed by letting the inner tube into or out of the outer tube. There is provided a nut at an end part of the inner tube. There are provided a bearing structure for supporting an end part of a feed screw, a worm reducer for rotating the feed screw and a motor attachment part at an end part of the outer tube (For example, refer to Japanese Patent Application Laid-Open (JP-A) Nos. 10-318345, 2000-39051, 2000-217304 and 2000-193063).
(B) In the second type of construction, the actuator consists of a feed screw and a reducer part. In this construction, the feed screw is fixed and the reducer part is moved on the feed screw in the axis direction by rotating a nut integrated with a worm wheel so that expanding/contracting operation is performed. The reducer part is provided with a bearing for rotatably holding the nut integrated with the worm wheel, a worm reducer and a motor attachment part. The reducer part is provided with an iron pipe for supporting the actuator and protecting the feed screw. (For example, refer to Japanese Patent Application Laid-Open (JP-A) Nos. 7-284513, 2000-352451, 2002-34694 and 2002-266975).

### Disclosure of the Invention

### Problems to be Solved by the Invention

However, the above-mentioned construction of the conventional actuators for reclining chair has the following problems.

In the construction (A), an iron or resin pipe as the outer tube part and a resin component as the reducer part are supplied separately. Then, these components are assembled.

In the construction (B), the reducer part and an iron pipe for supporting the actuator are supplied separately. Then, these components are assembled.

Therefore, in both cases (A) and (B), the number of components becomes large. This causes high component cost, a large number of molds and a lot of trouble for assembling.

Further, since large tubular components are used, there is a limitation in space for attaching a limit switch that detects a limiting point of expanding/contracting operation. Accordingly, it becomes necessary to install a structure for attaching the limit switch to the tubular components as a separate component or form a movable element for actuating the limit switch separately. These methods lead to higher cost.

To solve the above-mentioned problems of the prior art, the present invention intends to provide an actuator with simplified configuration that can be manufactured by using less number of components at lower cost. Solution for the Task

The present invention adopts the following means in order to solve the above-mentioned problems.

That is, the present invention is an actuator comprising an outer tube and a moving body movably supported with respect to the outer tube to perform extending/contracting operation and the actuator is provided with a casing that integrates the outer tube, a driving source attachment part for attaching a driving source that imparts driving force to the moving body, driving force transmittingmeans storagepart for storing driving force transmitting means transmitting driving force sent from the driving source and location detecting means attachment part for attaching location detecting means that detects the location of the moving body thereto, and is divided into two on the central axis of the moving body.

In this manner, the actuator can be manufactured with simple configuration. Further, the number of components can be reduced. In addition, the actuator can be manufactured at lower cost.

Preferably, the moving body is made of resin and has either feed screw or feed nut that constitutes a feed screw mechanism for moving ahead or back the moving body in one united body.

### Brief Description of the Drawings

Fig. 1 is an outline perspective view of the actuator 1 according to an embodiment of the present invention.
Fig. 2 is an exploded perspective view of the actuator 1 according to an embodiment of the present invention.
Fig. 3 is an explanation view illustrating the internal construction of the actuator 1 according to an embodiment of the present invention.
Fig. 4A is a front view of the actuator 1; Fig. 4B is a cross-section view taken on line A-A in Fig. 4A; Fig. 4C is a right side view of the actuator 1; and the Fig. 4D is a bottom view of the actuator 1.
Fig. 5A is a view of the actuator 1 during contraction of the inner pipe 5 when viewed from the side of the DC motor 6; and Fig. 5B is a cross-section view taken on line B-B in Fig. 5A.
Fig. 6A is a view of the actuator 1 during extension of the inner pipe 5 when viewed from the side of the DC motor 6; and Fig. 6B is a cross-section view taken on line C-C in Fig. 6A.

### Description of the Preferred Embodiments

An actuator in accordance with an embodiment of the present invention will be described below referring to the appended figures. The actuator of the present invention is applicable to reclining chairs such as massage chair, but not limited to them.

### (Overall configuration of the actuator 1)

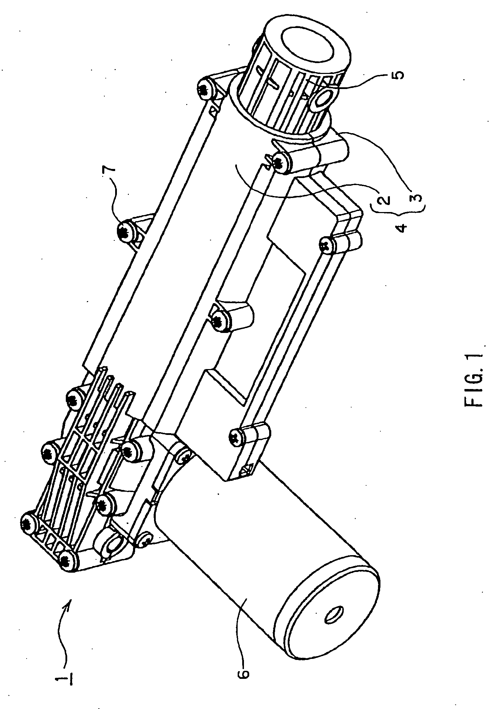

Fig. 1 is an outline perspective view of the actuator 1.

The actuator 1 is mainly configured by a gear case 4 consisting of a gear case upper part 2 and a gear case lower part 3, an inner pipe 5 and a DC motor 6. Here, the gear case 4 and the inner pipe 5 correspond to an outer tube and casing, and a moving body of the present invention, respectively.

The gear case upper part 2 and the gear case lower part 3 are attached to each other. The inner pipe 5 is movably stored in a hollow internal part 40 of the gear case 4. The gear case 4 of the actuator 1 is divided into two along the central axis as the moving direction of the inner pipe 5 stored in the hollow internal part 40 to form the gear case upper part 2 and the gear case lower part 3. The DC motor 6 is attached to the gear case lower part 3 at the end part opposite to an opening 41 through which the inner pipe 5 moves ahead or back so that a motor shaft 61 is orthogonal to the moving direction of the inner pipe 5. Here, the DC motor 6 corresponds to a driving force of the present invention.

In this way, the gear case 4 is configured so as to be divided along the central axis of the hollow internal part 40. Therefore, in the case where the gear case upper part 2 and the gear case lower part 3 are formed in molds, the molded part can be easily pulled out. Efficiency of the manufacturing process can be thus improved.

Here, it is preferable to fix the gear case upper part 2 to the gear case lower part 3 and the DC motor 6 to the gear case lower part 3 by using a self-tapping screw 7.

### (Internal construction of the actuator 1)

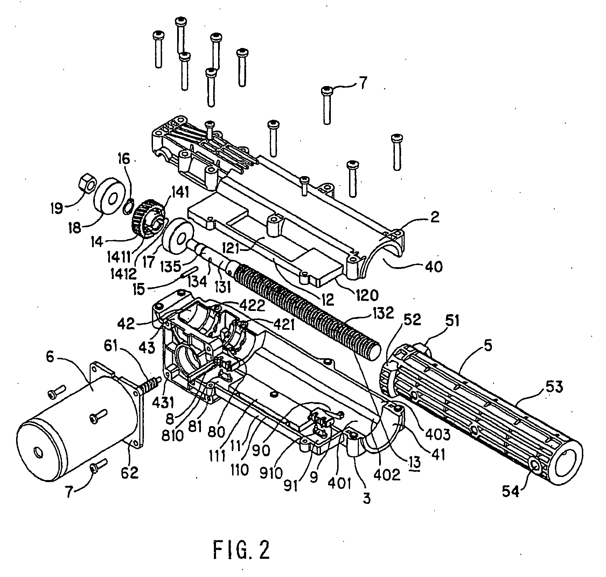

Fig. 2 is an exploded perspective view of the actuator 1.

As described above, the hollow internal part 40 that movably stores the inner pipe 5 therein is formed in the gear case upper part 2 to the gear case lower part 3. The hollow internal part 40 has the opening 41 opening outwards.

A wall forming the hollow internal part 40 has a cylindrical wall 401 in the shape of cylindrical surface corresponding to outline of the inner pipe 5, a stepped stopper wall 402 that bends toward external diameter with respect to the cylindrical wall 401 and a cylindrical large-diameter wall 403 having a larger diameter than the cylindrical wall 401 that is formed so as to be connected to the stopper wall 402.

The internal diameter of the end part of the opening 41 of the hollow internal part 40 is smaller than the internal diameter of the large-diameter wall 403 and larger than the external diameter of a cylindrical part 53 of the inner pipe 5. This prevents the inner pipe 5 from dropping out from the opening 41.

The large-diameter wall 403 located at the side of attaching the motor with respect to the central axis of the hollow internal part 40 is provided with micro-switch storage parts 81 and 91 that stores micro-switches 8 and 9, respectively at the side of opening 41 and a part of the side opposite to the opening 41 (hereinafter referred to as "base end side").

The micro-switch storage parts 81 and 91 are formed on platy parts 11 and 12 substantially in the shape of plate that extends in the direction of external diameter from the side end part of the side of attaching the motor in the gear case upper part 2 and the gear case lower part 3.

The platy parts 11 and 12 has an edge part 110 and a joint part 111 on the same plane as a divided plane of the gear case upper part 2 and the gear case lower part 3, and a recessed part in the divided plane.

The micro-switch storage parts 81 and 91 are formed between the platy parts 11 and 12 as the part recessed from the dividing plane. The micro-switch storage parts 81 and 91 are provided with protrusions 810 and 910 for attaching the micro-switches 8 and 9. Levers 80 and 90 of the micro-switches 8 and 9 each attached to the protrusions 810 and 910 are arranged so as to protrude into the hollow internal part 40 from notched parts of the large-diameter wall 403.

The joint parts 111 and 121 are formed between the micro-switch storage parts 81 and 91 of the platy part 11 and form the rectangle shape.

The edge part 110 and the joint part 111 at the side of the gear case lower part 3 and the edge part 120 and the joint part 121 at the side of the gear case upper part 2 are jointed to each other when assembling the gear case 4 and the end face of the joint part at the side of the hollow internal part 40 constitutes a part of the large-diameter wall 403.

Here, the micro-switches 8 and 9 correspond to location detecting means of the present invention and the micro-switch storage parts 81 and 91 correspond to location detecting means attachment parts of the present invention.

A gear storage part 42 for storing a gear is provided at an end part at the base end side of the gear case upper part 2 and the gear case lower part 3. The gear storage part 42 is also configured so as to divide into two along the central axis of the gear case 4. Here, the gear storage part 42 corresponds to a drive transmitting means storage part of the present invention.

A pedestal 43 in the shape of substantially square for attaching the DC motor 6 thereto is provided at the gear case lower part 3 laterally with respect to the axis direction. An attachment face 431 of the pedestal 43 is provided along the direction of the tangent line of a circle with the axis of the gear case 4 as a center. Further, the attachment face 431 is orthogonal to the divided plane of the gear case upper part 2 and the gear case lower part 3. Here, the pedestal 43 corresponds to a driving force attachment part of the present invention.

The inner pipe 5 is made of resin and takes the shape of column. Further, the inner pipe 5 has stopper parts 51 and 52 that protrude toward the external diameter at one end in the axis direction and a cylindrical part 53 with a substantially same diameter that is adjacent to the stopper parts 51 and 52 and extends to the other end in the axis direction.

Through holes 54 for communicating the hollow internal part 40 to the outside are provided at plural locations on the cylindrical part 53 of the inner pipe 5 in the axis direction. The cell-shaped recesses are applied to the periphery of the inner pipe 5 to form a plurality of ribs extending in the axis and periphery directions. This enables weight saving while maintaining rigidity.

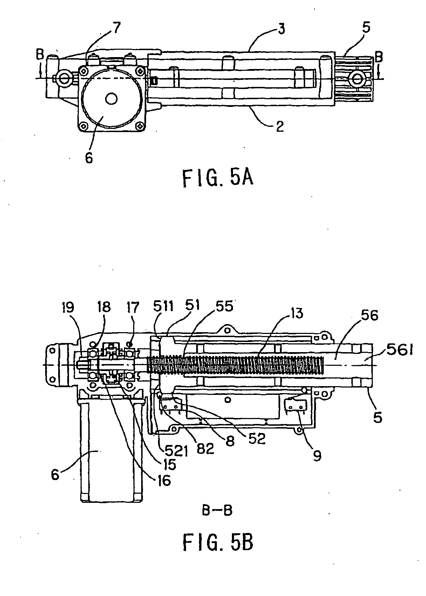

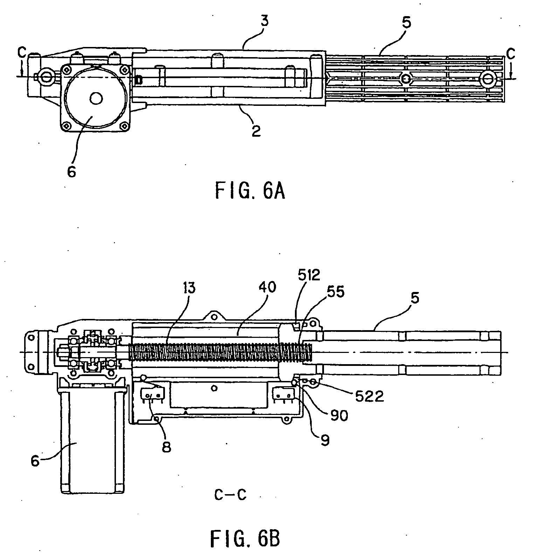

The inner pipe 5 has a feed nut 55 integrated therewith for engaging with the feed screw 13 at the end part opposite to the cylindrical part 53 that moves in or out of the opening 41 (Refer to Figs. 5 and 6) . Further, the inner pipe 5 has a hollow part 56 adjacent to the opening 41 of the feed nut 55. This hollow part 56 has an opening 561 opening to the end part at the side of the opening 41 of the gear case 4.

The above-mentioned stopper parts 51 and 52 are formed on the periphery of the feed nut 55. The stopper parts 51 and 52 are formed at two locations symmetrically about the axis. Periclinal parts of end faces 511 and 521 of the stopper parts 51 and 52 located at the side of the base end side in the axis direction are tapered. Further, the end faces 512 and 522 of the stopper parts 51 and 52 located at the side of the opening 41 in the axis direction are slanted toward the periclinal parts in the axis direction.

The feed screw 13 is arranged so that a base end part 131 having no thread is supported in the gear storage part 42 and a screw part 132 having a thread extends toward the opening 41 along the central axis of the hollow internal part 40.

The worm wheel 14 is fixed to the periphery of the base end part 131 of the feed screw 13. A cylindrical attachment part 141 for attaching the feed screw 13 thereto is provided at the side of internal diameter of the worm wheel 14. Notches 1411 and 1412 are formed on the attachment part 141 at symmetrical locations about the axis. These notches 1411 and 1412 are formed at the end part at the side of the opening 41 in the axis direction.

A through hole 134 is formed in the feed screw 13 at the locations corresponding to the notches 1411 and 1412 in the diameter direction. A spring pin 15 is put through the through hole 134 of the feed screw 13. The spring pin 15 is prevented from dropping out of the through hole 134 due to restoring force. Rotation in the peripheral direction and movement to the opening 41 of the worm wheel 14 are controlled by engaging the end part of the spring pin 15 protruding from the peripheral face of the feed screw 13 with notches of the worm wheel 14.

A groove 135 is formed on the periphery of the feed screw 13 in the peripheral direction at the location opposite to the spring pin 15 of the worm wheel 14. The worm wheel 14 is prevented from moving from the side opposite to the opening 41 in the axis direction by fitting the groove 135 with a C-shaped retaining ring for a shaft.

Bearings 17 and 18 for rotatably supporting the base end part of the feed screw 13 with respect to the gear case 4 are provided at both sides of the worm wheel 14 in the axis direction. The bearings 17 and 18 are held in holding part 421 and 422 formed in the gear case upper part 2 and the gear case lower part 3.

An U nut 19 is engaged with the feed screw 13 at the end part opposite to the opening 41.

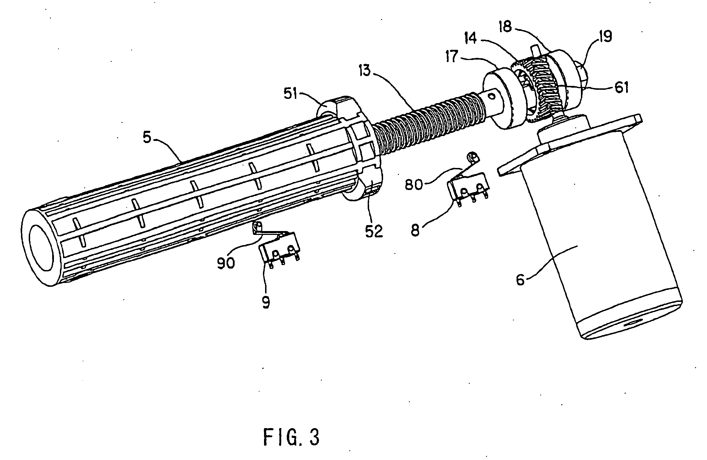

Fig. 3 shows the internal construction of the actuator 1.

Aworm gear is formed integrally with the motor shaft 61 of the DC motor 6. The DC motor 6 is fixed to the gear case 4 by screwing four corners of a flange 62 to four corners of the attachment face of the pedestal 43. At this time , the worm gear 61 protruding from the end face of the DC motor 6 is inserted into the gear storage part 42 through a through hole disposed at the center of the pedestal 43 formed at the gear case lower part 3.

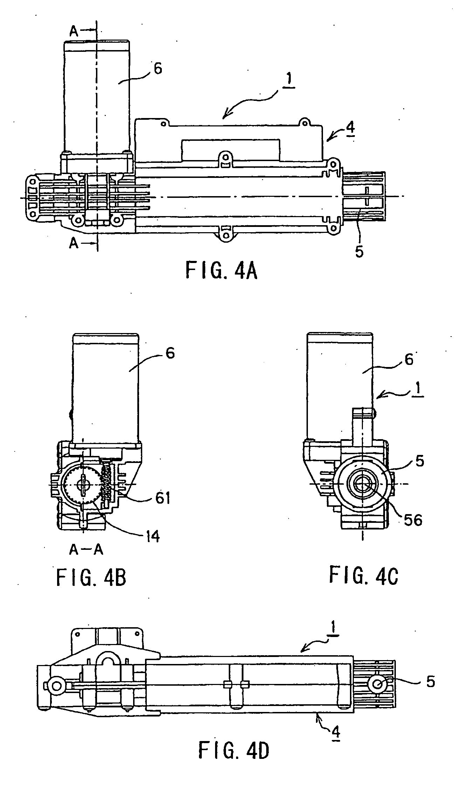

Fig. 4A is a front view of the actuator 1 (view when viewed from the side of the gear case lower part 3), Fig. 4B is a cross-section view taken on line A-A in Fig. 4A, Fig. 4C is a right side view of the actuator 1 (view when viewed from the front end of the inner pipe 5) and the Fig. 4D is a bottom view of the actuator 1 (view when viewed from the side opposite to the DC motor 6).

The worm gear 61 inserted into the gear storage part 42 engages with the worm wheel 14 fixed to the feed screw 13 at the side of the gear case lower part 3 with respect to the shaft center of the feed screw 13. The central axis of the worm gear 61 and the above-mentioned spring pin 15 for fixing the worm wheel are located on the same plane.

Here, the worm gear 61, the worm wheel 14 and the feed screw 13 correspond to driving force transmitting means of the present invention.

Since the gear case 4 is configured so as to be divided into two along the central axis, most of operations of assembling components such as the feed screw 13, the inner pipe 5 and micro switches 8 and 9 can be performed on a flat surface. Therefore, operation process can be simplified.

### (Operation of the actuator 1)

Fig. 5A is a view of the actuator 1 during contraction of the inner pipe 5 when viewed from the side of the DC motor 6 and Fig. 5B is a cross-section view taken on line B-B in Fig. 5A. Fig. 6A is a view of the actuator 1 during extension of the inner pipe 5 when viewed from the side of the DC motor 6 and Fig. 6B is a cross-section view taken on line C-C in Fig. 6A. Here, both of the cross-section taken on B-B and the cross-section taken on C-C correspond to the divided plane of the gear case upper part 2 and the gear case lower part 3.

In the actuator 1 assembled as described above, the worm gear 61 is rotated by driving the DC motor 6, thereby to rotate the worm wheel 14 engaged therewith. The worm wheel 14 is prevented from rotating with respect to the feed screw 13 for fixation. Therefore, the feed screw 13 is rotated by rotating the worm wheel 14.

Although the inner pipe 5 engages with the feed screw 13, rotation of the inner pipe 5 about the axis in the gear case 4 is restrained by bringing the stopper of the inner pipe 5 into contact against the stopper wall 402 of in the hollow internal part 40.

For this reason, according to the rotation of the feed screw 13, the inner pipe 5 is moved in the hollow internal part 40 along the axis. At this time, the stopper is guided by the stopper wall 402 in the hollow internal part 40 so as to move within the space surrounded by the stopper wall 402 and the large-diameter wall 403. Therefore, even when the inner pipe 5 moves along the axis, rotation of the inner pipe 5 about the axis is restrained.

Since rotation of the inner pipe 5 about the axis is restrained in this manner, test of the actuator can be performed without being attached to a mated member.

Fig. 5B shows the state in which the inner pipe 5 is moved to the side of the gear storage part 42 and a lever 80 of the micro switch 8 at the base end side is pushed by end faces at the base end side 511 and 521 of the stopper parts 51 and 52.

Fig. 6B shows the state in which the inner pipe 5 is moved to the side of the opening 41 and a lever 90 of the micro switch 9 at the side of the opening 41 is pushed by end faces at the opening side 512 and 522 of the stopper parts 51 and 52.

In this manner, rotational driving force caused by driving the DC motor 6 is transmitted to the worm gear 61, the worm wheel 14 and the feed screw 13. Accordingly, by the rotation of the feed screw 13, the inner pipe 5 with which the feed nut 55 engaged with the feed screw 13 is integrated moves ahead or back in the axis direction. Limit position at which the inner pipe 5 moves ahead or back in the axis direction can be detected by two micro switches 8 and 9.

According to the present invention, an actuator with simplified configuration that can be manufactured by using less number of components at lower cost can be provided.

## Claims

1. An actuator comprising an outer tube and a moving body movably supported with respect to the outer tube to perform extending/contracting operation,
**characterized in that** the actuator comprises
a casing that integrates the outer tube, a driving source attachment part for attaching a driving source that imparts driving force to the moving body, driving force transmitting means storage part for storing driving force transmitting means transmitting driving force sent from the driving source and location detecting means attachment part for attaching location detecting means that detects the location of the moving body thereto, and is divided into two on the central axis of the moving body.

2. An actuator according to claim 1, wherein that the moving body is made of resin and has either feed screw or feed nut that constitutes a feed screw mechanism for moving ahead or back the moving body in one united body.
